# EUROPEAN PATENT APPLICATION

(11) **EP 0 935 302 A1**
(43) Date of publication of application: **11.08.1999**
(21) Application number: 97918371.2
(22) Date of filing: 07.05.1997
(51) Int. Cl.: H01M 4/58

(54) **CATHODE MATERIAL FOR LITHIUM ION SECONDARY BATTERY, METHOD FOR MANUFACTURING THE SAME, AND LITHIUM ION SECONDARY BATTERY USING THE SAME**

(30) Priority: 07.05.1996 JP 13749196
(71) Applicant: TOYO TANSO CO., LTD., Osaka-shi, osaka 555 (JP)
(72) Inventor: TANAKA Udai, Toyo Tan Co., Ltd., Mitoyo-gun, Kagawa 769-16 (JP); SASAKI, Akihito, Toyo Tanso Co., Ltd., Mitoyo-gun, Kagawa 769-16 (JP); SAKAGOSHI, Haruo, Toyo Tanso Co., Ltd., Mitoyo-gun, Kagawa 769-16 (JP); ITO, Masayuki, Toyo Tanso Co., Ltd., Mitoyo-gun, Kagawa 769-16 (JP)
(74) Representative: Leson, Thomas Johannes Alois, Dipl.-Ing.
(86) International application number: JP9701526
(87) International publication number: WO9742671

(57) **Abstract**

An anode material for lithium secondary batteries which eliminates the disadvantageous of the conventional graphite materials and amorphous materials maintains the advantages of the materials, withstands overdischarge, has a small size and a light weight, and is high in energy density. The anode material is a graphitized carbon material prepared by heat-treating a carbon material block containing boron or a boron compounds (containing 3-20 wt.% of boron, preferably, boron oxides) and crushing the block into particles, and adjusting the particle size of the particles. The size Lc of crystallites in the c-axis direction is more than 100nm and in the a-axis direction less than 100 nm. In the method for manufacturing the anode material, a mixture prepared by adding the power of the boron compound to a carbon material at a ratio of 3-20 wt.% in terms of boron is blocked and the blocks are heat-treated at a temperature above 2,400°C in a redusing or inert gas atmosphere, and then, the obtained graphitized carbon material blocks are crushed into particles with a crushing means with which the blocks crushed in the a-axis direction rather than in the c-axis direction, and the particle size of the particles is adjusted.

## Description

### Technical Field

The present invention relates to an anode material for a lithium ion secondary battery which dopes or undopes lithium ion, a producing method therefor, and a lithium ion secondary battery using the anode material.

### Background Art

The trend in recent years has been for the electrical and electronic equipment to reduce size and weight, and as such hastens the development of secondary battery of compact, lightweight and high energy density. As part of the results of the developments, a lithium ion secondary battery using LiCoO2 or equivalent as an active material for a cathode and using a carbon material for an anode (hereinafter it is simply referred to as "lithium secondary battery") has attracted particular attention.

Particularly, it is fully anticipated that the carbon material for anode holds one of the keys to the realization of a compact and high capacity lithium secondary battery, and accordingly investigations of novel and useful carbon materials for anode are now proceeding. However, carbon materials for anode exist in a wide variety of existing forms, including graphite, coke, carbon black, activated carbon, and carbon fiber. In addition, to take graphite as an example, various kinds of graphite exist, including natural graphite, artificial graphite and Kish graphite. Further, in the case of natural graphite, it varies in property depending on the locality, while, in the case of artificial graphite, it varies in property depending on the starting material, heat treatment temperature, etc.. Thus, a great variety of carbon materials exist and vary in property. This means that the properties as the anode materials of the lithium secondary battery are also full of variety, which leads to difficulties in anticipation and in turn to difficulties in the research and development of the carbon materials for anode.

Carbon materials for anode of the lithium secondary battery (hereinafter they are simply referred to as "anode material") which have been proposed so far can be roughly categorized into those of the so-called graphite structure and those of the amorphous structure in terms of crystal structure. Those of the graphite structure have a developed, crystallized structure, including natural graphite and artificial graphite formed by coke and the like being heat-treated at about 3,000 °C . When used as the anode material, those of the graphite structure provide the advantages of being low in irreversible capacity in the initial cycle, flat in electric discharge potential, large in density and thus high in capacity, but on the other hand, they provides the disadvantages of having a tendency of being inferior in cycle life performance · high-load properties and of having difficulties in displaying the remaining capacity because of the flatness in electric discharge potential.

On the other hand, those of the amorphous structure have a not-developed crystallized structure, including furfuryl alcohol, carbides of around 1,000°C of synthetic resins including phenol resin, and cokes of pitch series or petroleum series. When used as the anode material for the lithium secondary battery, those of the amorphous structure provide the advantages of being excellent in cycle property, enabling to display the remaining capacity of battery and having the potential for producing a battery having a capacity exceeding a theoretical capacity, but on the other hand, they provides the disadvantages of being large in irreversible capacity in the initial cycle, variable in electric discharge potential, and susceptible to delicate changes in the manufacturing process, because of the amorphous structure, to increase variations.

The invention has been accomplished after a series of experiments to find out an optimal anode material for the lithium secondary battery with no disadvantages, as a substitute for the previously proposed anode materials of the lithium secondary battery each having merits and demerits in application to the anode material for the lithium secondary battery of compact, lightweight and high energy density, as described above.

It is the object of the invention to provide an anode material for a lithium secondary battery capable of taking full advantage of the merits of both of the conventional materials of graphite structure and those of amorphous structure, together with eliminating the demerits of the both, and further resistant to over-discharge, a producing method therefor, and a lithium secondary battery using the anode material.

### Disclosure of the Invention

After a series of experiments and studies to accomplish the above-described object, the inventors have found out that when a carbon material is formed into a block for the time being after adding an adequate amount of boron or boron compound thereto and then is heat-treated and thereafter the heat-treated material block is pulverized under the proper control, that could produce an anode material for a lithium secondary battery capable of taking full advantage of the merits of both of the conventional materials of graphite structure and those of amorphous structure, together with eliminating the demerits of the both, and further withstanding over-discharge.

Particularly, the inventors have found out that an effective anode material for a lithium secondary battery could be produced by pulverizing the material block under the control which a specific effect is exerted on the crystal structure of the heat-treated material block; and that a further effective anode material for a lithium secondary battery could be produced by specifying the amount and the kind of boron or boron compound added.

After further studies based on the thus obtained knowledge, the present invention has been accomplished. An anode material for a lithium secondary battery of the first invention is characterized by a graphitized carbon material produced by a block of carbon material containing boron or boron compound being heat-treated and controlled in particle size so that the crystallites have a size Lc of not less than 100 nm with respect to an axis c direction and a size La of less than 100 nm with respect to an axis a direction. This can produce an anode material for a lithium secondary battery capable of taking full advantage of the merits of both of the conventional materials of graphite structure and those of amorphous structure, together with eliminating the demerits of the both.

The second invention is characterized in that of all the features of the first invention, a ratio of the boron compound presenting as boron in the graphitized carbon material is in the range of 3- 20 Wt.%. This can produce the effect of producing an anode material for a lithium secondary battery by use of which a lithium secondary battery capable of ensuring the stability of electric potential and further promoting high capacity is formed, in addition to the effect provided by the invention as set forth in Claim 1.

The third invention is characterized in that of all the features of the first invention, boron oxide is used as the boron compound. This can produce the effect of producing the anode material for a lithium secondary battery by use of which a lithium secondary battery capable of further raising the level of the promoted high capacity is formed, in addition to the effects provided by the invention of Claim 1 or 2.

The fourth invention is characterized in that the anode materials for lithium secondary battery according to the first to third invention is limited to the anode material having such a particular discharge property that the discharge capacities [ mAh / g ] for not less than 1.3V [ VvsLi /Li +] correspond to 1% or more of the discharge capacities [ mAh / g ] for 0 to 0.25V [ VvsLi / Li+ ] . In other words, the fourth invention is so formed as to have the merit of flatness in electric potentials to about 0.25V [ VvsLi / Li+ ] , as in the conventional material of graphite structure, and also have 1% or more of the discharge capacities for 0 to 0.25V with respect to the discharge capacities for not less than 1.3V [ VvsLi / Li+ ] , to thereby produce an anode material for a lithium secondary battery capable to withstand over-discharge.

A method for producing an anode material for a lithium secondary battery according to the fifth invention is characterized in that a mixture prepared by adding a powder of boron compound to a carbon material in a ratio of 3- 20 wt.% in terms of boron is formed into a block and then the block is heat-treated at temperatures of not less than 2,400°C in a reducing atmosphere or an inert gas atmosphere, and the obtained graphitized carbon material block is controlled in particle size via a pulverizing means for inducing the block to be fractured in an a-axis direction rather than peeled off in a c-axis direction. This producing method can effectively provide an anode material for a lithium secondary battery capable of taking full advantage of the merits of both of the conventional materials of graphite structure and those of amorphous structure, together with eliminating the demerits of the both.

A producing method of the sixth invention is characterized in that of all the features of the fifth invention, "the pulverizing means for inducing the graphitized carbon material block to be fractured in the a-axis direction rather than peeled off in the c-axis direction" is adapted to cool the graphitized carbon material block in advance before pulverizing it. The adoption of this cooling pulverizing means can provide the effect of obtaining an anode material for a lithium secondary battery in a further economical way, in addition to the effect of the fifth invention.

The seventh invention is characterized in that of all the features of the sixth invention, the means for "cooling in advance" is adapted to cool the graphitized carbon material block in advance by use of liquid nitrogen. The adoption of this pulverizing means for cooling by use of liquid nitrogen can produce an anode material for a lithium secondary battery capable of surely achieving the effect of the sixth invention.

Further, a lithium secondary battery of the eighth invention is characterized in that it uses the anode material according to the first to fourth invention as an active material for the anode. This lithium secondary battery can produce the good effects of taking full advantage of the merits of both of the conventional materials of graphite structure and those of amorphous structure, together with eliminating the demerits of the both, and further withstanding over-discharge in particular.

Detailed description of the invention will be given below.

First, carbon material including coke, raw coke and graphite, which are controlled in particle size when required, is used as an aggregate, and a binder, such as pitch, and boron (3- 20 Wt.%) or boron compound (3 - 20 Wt.% in terms of boron) are added to the carbon material and kneaded. The kneaded material is molded into a proper block form by a mold or equivalent and is heat-treated at temperature of not less than 2,400 °C in a reducing atmosphere or an inert gas atmosphere. The as-heat-treated graphitized carbon material block thus obtained is pulverized in a specific manner as discussed later, and then is controlled in particle size in accordance with the grading and the like to thereby produce a desired anode material for a lithium secondary battery.

It is noted that the addition of boron or boron compound is not necessarily performed at the same time as the addition of the binder such as the pitch and the like, but may be performed in the process of pulverizing and kneading the mixture of graphite or equivalent and pitch or equivalent. The boron compounds which may be used include a compound of BxOy (x = 1 - 8, y= 1 - 8) per se, such as B203, or the compound having a valence of 1 - 8 and ionized positively or negatively (e.g. H3 BO3), including B4C and BN. Of all these boron compounds, boron oxide, when used, can provide the advantageous effect that fine pores are formed due to development of excess oxidation in the process of heat treatment to thereby produce the graphitized carbon material block having a crystal structure capable to provide an improved dope effect of lithium.

The amount of boron compound added is so set that a ratio of the boron compound presenting as boron in the heat-treated, graphitized carbon material is in the range of 3- 20 Wt.%. This is because, at the ratio of less than 3%, the promotion of graphitization cannot be expected, while on the other hand, at the ratio over 20%, a large amount of boron carbides are present as a mixture in the heat-treated, graphitized carbon material, so that the discharge capacity is significantly reduced, in other words, the merits by the addition of boron is completely removed, to increase markedly in considerable reduction of the performance of the battery. Accordingly, the ratio should preferably be in the range of 3 - 10 Wt.%. When the adding amount is set within 10%, the effect in respect of the improvement in crystal structure induced by the addition of boron can be fully expected, while the ratio of boron carbides present as a mixture in the heat-treated, graphitized carbon material can be reduced to such a very limited amount that the negative effect acting on the property of the battery can be suppressed as minimum as possible.

No particular limitation is imposed on the means for forming a reducing atmosphere or an inert gas atmosphere as the atmosphere for the heat treatment, as long as it exerts little negative influence on the carbon material as the anode material for the secondary battery. For example, the atmosphere may be formed by a gas generated from a binder, such as a pitch, or argon gas. The heat-treatment temperature is set at 2,400 °C or more, in consideration of the effect that the carbon material obtained with heat-treated at 2,400 °C or more shows an ideal hexagonal graphite structure with an interlayer distance d002 of 0.335 nm measured by a X-ray diffraction method and a P1 value of Warren (probability of nearest hexagonal network planes being stacked by graphite means) of 1.

Next, the description on the pulverizing means for the heat-treated, graphitized carbon material block will be given. The inventors have noted that in general, the crystallites should preferably be larger in size with respect to the c-axis direction and be smaller in size with respect to the a-axis direction, in order to accomplish the graphitized carbon material of crystal structure that can enhance the effect of doping or undoping lithium. However, when viewed from the point of crystal structure, as the graphitization proceeds, the crystallites usually increase not only in size Lc of the c-axis direction but in size La of the a-axis direction, so that the crystallites have to be physically divided along the a-axis direction. In other words, phenomenally, pulverization must be given to the crystallites. However, usual pulverization cannot solve this problem, because, since graphite is a kind of lattice layer, the usual pulverization gives priority to layer separation and resultantly produces pulverized crystallites having a small Lc and a large La.

Accordingly, the inventors have arrived at the way of pulverizing a heat-treated, graphitized carbon material block by use of "a pulverizing means for inducing the heat-treated, graphitized carbon material block to be fractured in the a-axis direction rather than peeled off in the c-axis direction". It is noted that the terminology of " the pulverizing means for inducing the block to be fractured in the a-axis direction rather than peeled off in the c-axis direction" is intended to mean any types of pulverizers including an impact pulverizer that are applicable in single or in combination, as long as they are capable of pulverizing the crystallites into particles having the Lc of not less than 100 nm and the La of less than 100 nm. The graphitized carbon material block should be cooled in advance before it is thrown into the pulverizer, because that will reduce load on the pulverizer and provide a cost-efficient way to pulverisation. Further, in this case, the graphitized carbon material block should preferably be cooled by liquid nitrogen, because that will promote the fracture in the a-axis direction, and as such can easily and surely produce the pulverized particles of the crystallites having the Lc of not less than 100 nm and the La of less than 100 nm and also provide further reduction of load on the pulverizer.

In the anode material for a lithium secondary battery of the present invention, the boron compound added provides a great desirable effect on the crystal structure of the carbon material and specificity. The discussion on this will be given here. It is known that boron is one of the catalysts that can promote crystallization of the carbon materials. The inventors also confirmed that the carbon material produced by adding boron compound with mixing, followed by the heat treatment at not less than 2,400°C , had an ideal hexagonal graphite structure with an interlayer distance d002 of 0.335 nm measured by the X-ray diffraction method and the P1 value of Warren (probability of nearest hexagonal network planes being stacked by graphite means) of 1.

It is understood from this that the anode material thus produced has the advantages of being small in irreversible capacity in the initial cycle, flat in electric discharge potential, large in density and thus high in capacity, as in the conventional carbon material of graphite structure.

Further, the heat treatment at not less than 2,400 °C produces the carbon material in which a part of the added boron is substituted by a carbon atom of a hexagonal ring, and accordingly the resultant carbon material has a sort of structural defect at its part substituted by boron.

It can be said that the presence of this structural defect caused by the substitution for the carbon atom is significant for the present invention. In other words, the presence of the structural defect results in the phenomenon in which lithium is trapped in the defected part of the carbon material in a different form from the form of lithium being intercalated between graphite layers.

When the carbon material in which lithium is trapped in that way is used as the anode material for a lithium secondary battery, the discharge curve represents a flatness in potential as in the case of the one of graphite structure and then represents a sloping as in the case of the one of the amorphous structure. Thus, the carbon material according to the invention provides the merits of the conventional material of amorphous structure, of overcoming weakness in over-discharge which is one of the demerits of the lithium battery; enabling to display the remaining capacity of battery; and others, and thus is very useful as the anode material for lithium secondary battery.

When oxide is used as the boron compound, fine pores are formed in a surface of the carbon material by the oxidative effect and the lithium is trapped in the pores. As a result, the amount of the trapped lithium increases to that amount, thus further increasing the advantage as the anode material for lithium secondary battery. Further, when the heat-treated carbon material is pulverized into an controlled particle size, it is pulverized by a special pulverizing method, such as a low-temperature pulverizing method using liquid nitrogen, so that the crystallites can have the size Lc of not less than 100 nm with respect to the c-axis direction and the size La of less than 100 nm with respect to the a-axis direction which are measured by the X-ray diffraction method. This can provide an improved diffusion of lithium into the interlayer of carbon to eliminate the demerit of the carbon material of graphite structure of being poor in booting charge.

### Brief Description of the Drawings

FIG. 1 is a view listing properties of pulverised products obtained in Examples 1, Comparative Examples 1 and Comparative Examples 2;
FIG. 2 is a view listing battery properties of those pulverized products;
FIG. 3 is a view showing charge and discharge curves of the anode material for lithium secondary battery of Example 1(c) and that of Comparative Example 1(c) (both are pulverized at low temperatures); and
FIG. 4 is an exploded perspective view of the lithium secondary battery according to the Examples.

### Best Mode For Carrying out the Invention

The present invention will be described in further detail with reference to the Examples and Comparative Examples.

### (Examples 1)

50 parts by weight of coal tar pitch was added to 100 parts by weight of pitch coke controlled in size to an average particle size of 10 µ m, with kneadingat 200°C. The mixture was controlled in size to a mean particle diameter of 100µ m and thereafter was mixed with (a) 3 Wt.% of B203, (b) 5 Wt.% of B4C, (c) 10 Wt.% of B203 and (d) 20 Wt.% of B4C in boron equivalent, respectively. The respective mixtures were molded into a block form with a cold hydrostatic isotropic press (CIP). The block-like molds thus produced were heat-treated (baked) at 1,000 °C and then were heat-treated (for graphitization) at 2,600 °C.

### (Comparative Examples)

50 parts by weight of coal tar pitch was added to 100 parts by weight of pitch coke controlled in size to a mean particle diameter of 10 µ m, with kneadingat 200°C. The mixture was controlled in size to a mean particle diameter of 100µ m and thereafter was mixed with (a) 2 Wt.% of B203, and (b) 25 Wt.% of B4C in boron equivalent, respectively. Three in total, i.e., these two mixtures and (c) the one to which no boron compound was added, were molded into a block form with the cold hydrostatic isotropic press (CIP). The block-like molds thus produced were heat-treated (baked) at 1,000 °C and then were heat-treated (for graphitization) at 2,600 °C.

### (Comparative Examples 2)

(a) 3 Wt.% of B203, (b) 5 Wt.% of B4C, (c) 10 Wt.% of B203 and (d) 20 Wt.% of B4C in boron equivalent were respectively mixed in pitch coke controlled in size to a mean particle diameter of 20 µ m, respectively. The respective mixtures were placed in a crucible made of graphite and were heat-treated at 2,600 °C.

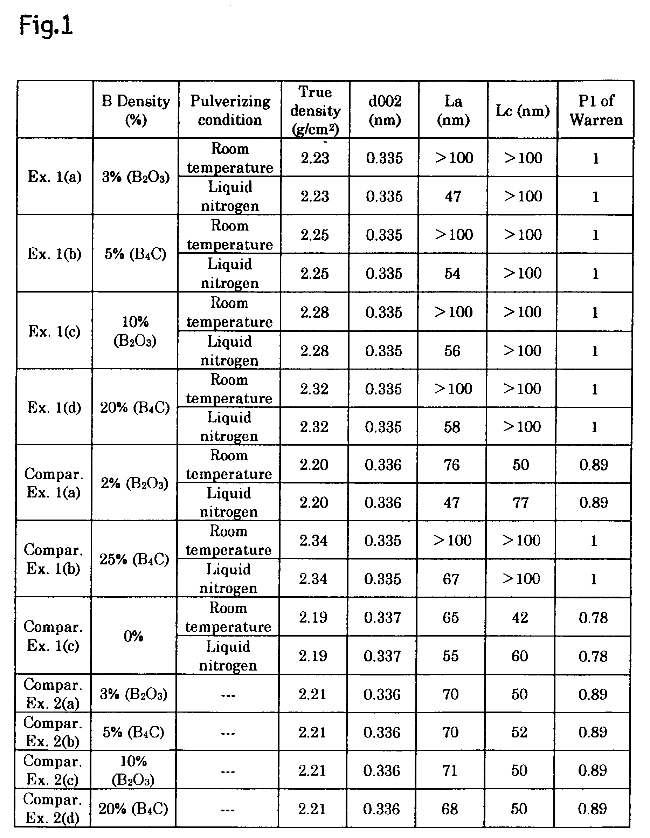

The graphitized materials obtained in Examples 1 and Comparative Examples 1 were cooled at room temperature and by use of liquid nitrogen and then pulverized into particles having a mean particle diameter of 20 µ m. The properties of the pulverized products thus produced and of the pulverised products in Comparative Examples 2 are shown in FIG. 1. Since the fine particles obtained in Comparative Examples 2 include therein blocks of particles which were all probably due to the fused boron carbide (B4C), they were passed through a screen of 63µ m. Shown in the same figure are the properties of the thus sieved particles. Also, the same particles were used in the production of the following lithium secondary batteries as well.

N-methyl-2pyrrolidone (NMP) was added to 90 parts by weight of the respective fine particles described above and 10 parts by weight of polyvinylidene fluoride to make the particles pasty.

Then, the resultant particles were uniformly coated on copper foils by a doctor blade method, followed by vacuum drying at 150°C for five hours to remove the NMP from the copper foils. Then, metallic lithium foils were used for a counter electrode and a reference electrode; a mixed solution of ethylene carbonate (EC) and 1,2-dimethoxyethane (DME), in which LiPF6 (lithium hexafluorophosphate) was dissolved at concentration of 1 mole/ liter, was used for electrolyte; and a fine porous membrane of ion permeable polypropylene was used for a separator, to thereby produce a nonaqueous solvent lithium secondary battery.

This constructed lithium secondary battery was charged to 0 volt at the current density of 0.5 mA/ cm2. The numerical value resulting from the division of the then electric valuable by mass of the graphite powder used was defined as a doping capacity and expressed in units of mAh/g. Next, the lithium was removed from the graphite powder doped with lithium in an analogous fashion. The removal or undoping was performed at the current density of 0.5 mA/cm2 and the cut-off voltage of 3.0 V. The numerical value resulting from the division of the then quantity of electricity by mass of the graphite powder used was defined as an undoping capacity and expressed in units of mAh/ g.

The difference between the doping capacity and the undoping capacity, i.e., the numerical value resulting from the division of the irreversible capacity (mAh / g) and the de-doping capacity by the doping capacity, in other words, the coulombic efficiency (%) was determined.

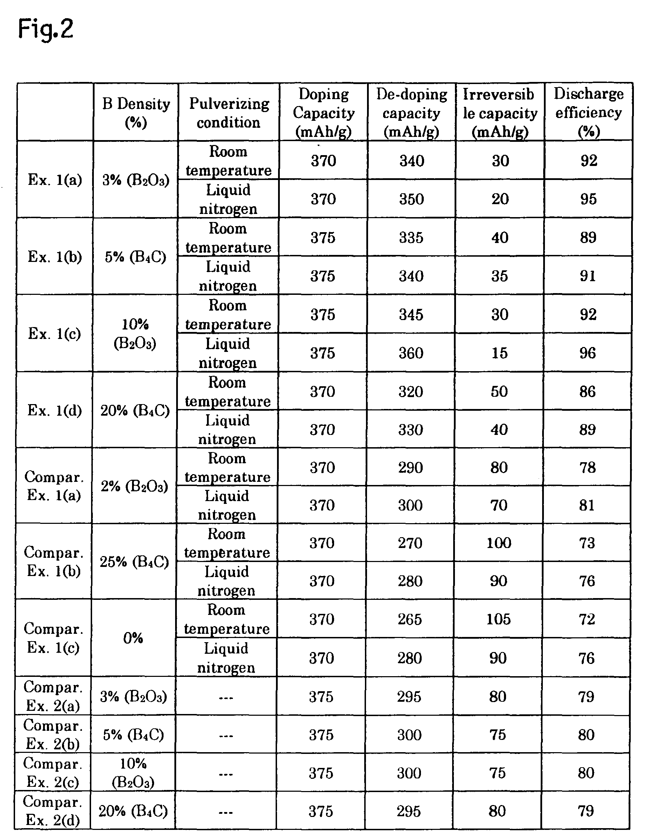

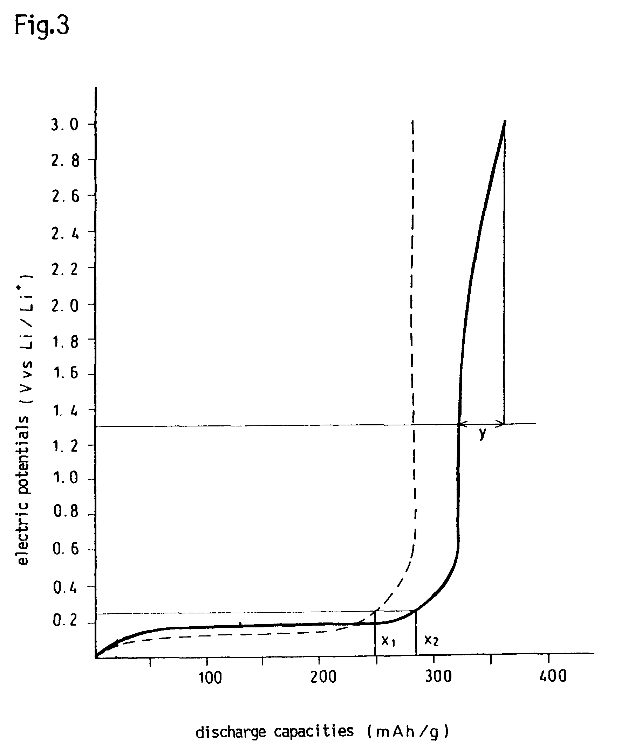

Properties for the battery of the respective graphite powders are shown in FIG. 2. Shown in FIG. 3 are charge and discharge curves of the anode material for lithium secondary battery of Example 1(c) and that of Comparative Example 1(c) (both are pulverized at low temperatures). It is well appreciated from FIGS. 1 and 2 that the anode materials for the lithium secondary battery produced in Examples 1 provided the results of being high in doping capacity as well as in undoping capacity; small in irreversible capacity; and high in coulombic efficiency.

As obvious from FIG. 3, the anode material for the lithium secondary battery produced in Example 1(c) has, as compared with Comparative Example 1(c) (conventional cathode material of graphite structure), the merit of flatness in electric potentials to about 0.25V [ VvsLi / Li+ ] , as in the conventional material of graphite structure, and also has at least 1% of the discharge capacities for 0 to 0.25V with respect to the discharge capacities for not less than 1.3V [ VvsLi / Li+ ] , to thereby produce an anode material for a lithium secondary battery capable to withstand the over-discharge.

### (Production of the battery of Examples)

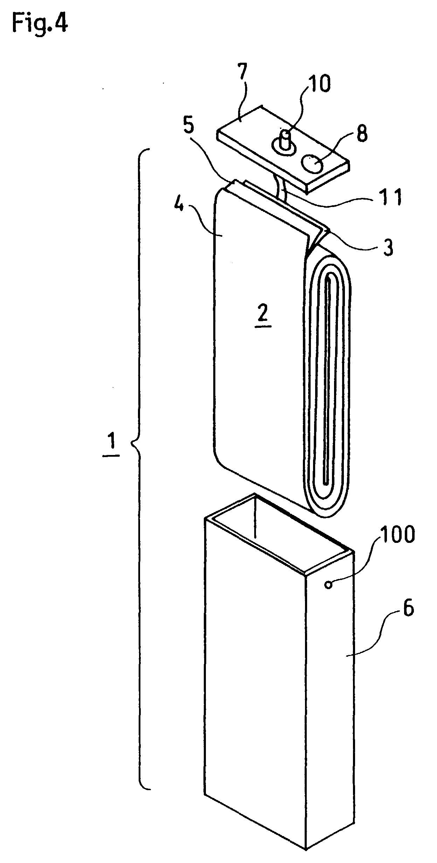

Shown in FIG. 4 is an exploded perspective view of the lithium secondary battery of the invention. In FIG. 4, 1 denotes a lithium secondary battery; 2 a group of electrodes; 3 a cathode plate; 4 an anode plate; 5 a separator; 6 a battery case; 7 a case cover; 8 a safety valve; 10 an anode terminal; and 11 an anode lead. The lithium secondary battery 1 is constructed from the group of curled electrodes 2 comprising the cathode plate 3, the anode plate 4, the separator 5 and nonaqueous electrolyte being accommodated in the battery case 6.

The battery case 6 is formed of a steel body, having the thickness of 0.3 mm and the inside dimension of 33.1 × 46.5× 7.5 mm, being plated with nickel in thickness of 5µ m and is provided at its top in a side thereof with an electrolyte filling hole 12. The cathode plate 3 comprises a collector of aluminum foils having a thickness of 20 µ m to which lithium cobalt composite oxide is retained asan active material. The cathode plate 3 was prepared in the manner that after 8 parts of polyvinylidene fluoride as a binding agent and 5 parts of acetylene black as conductive agent were mixed together with 87 parts of active material and then set to be pasty, the pasty mixture was coated on both surfaces of the collector material and then dried.

The anode plate 4 was prepared in the manner that 90 parts by weight of carbon material as described above and 10 parts by weight of polyvinylidene fluoride as the binding agent were mixed, followed by the addition of N-methyl-pyrrolidone, to set the mixture to be pasty, and then the pasty mixture was coated on both surfaces of the collector of copper foils having a thickness of 20 µ m and then dried. The fine porous membrane of polypropylene was used for the separator 5, and the isovolumic mixed solution of ethylene carbonate (EC) and 1,2-dimethoxyethane (DME), in which LiPF6 (lithium hexafluorophosphate) was dissolved at concentration of 1 mole/ liter, was used for the electrolyte.

The cathode plate 3 is connected with the terminal 10 at the case cover 7, in which the safety valve 8 and the cathode terminal 10 are provided, through the cathode lead 11. The anode plate 4 is connected with an inner wall of the battery case 6 by contact therewith. The battery is sealed by welding the cover 7 to the case 6 through a laser welding. The battery A (the anode plate is the one produced in Example 1(c)) and the battery B (the anode plate is the one produced in Comparative Example 1(c)), both having the above-described construction and a design capacity of 900 mAh, were prepared. However, the electrolyte was set to 25 ml.

### (Tests)

The batteries A, B of Examples were charged in full to 4.1V at the current of 0.5C for 5 hours under constant-voltage and constant-current charge. Then, the batteries were discharged to 2.75 V at the current of 1 C, to measure their discharge capacities. The results were that the discharge capacity of the battery A showed 890 mAh of substantially equal to the design capacity, while on the other hand, that of the battery B was 700 mAh of significantly lower than the design capacity.

After the both batteries A, B were discharged further to 2.2 V, they were disassembled in a glove box under an argon atmosphere to check for the state of the anode plates. The check revealed that no abnormal event occurred in the battery A, while, anodic disolution of the copper foils of the collector occurred in the battery B.

It was understood from these results that the battery A of the invention had an excellent discharge capacity, as compared with the conventional type of battery B, and by virtue of its particularly having at least 1% of discharge capacities for 0 to 0.25 V [ VvsLi / Li+ ] with respect to the discharge capacities fornot less than 1.3 V [ VvsLi / Li+ ] , the battery of the invention was resistant to over-discharge and high in reliability and safety.

It is to be noted that the lithium secondary battery according to the invention may be so modified as to be constructed from combination of the anode, the cathode, the separator and the nonaqueous electrolyte or combination of the anode, the cathode, organic or inorganic solid electrolyte as the separator and the nonaqueous electrolyte, or may not be limited thereto. Also, the active material for the cathode, the shape of battery and the organic solvent are fundamentally not of restrictive. As long as those are substantially identical to those used in the conventional type of lithium secondary battery, similar effects to those of the invention can be obtained.

### Capabilities of Exploitation in Industry

As apparent from the above, the anode material according to the invention is useful as the anode material for a lithium secondary battery of compact, lightweight, high in energy density and resistant to over-discharge.

## Claims

1. An anode material for a lithium secondary battery characterized by a graphitized carbon material produced by a block of carbon material containing boron or boron compounds being heat-treated and controlled in particle size so that the crystallites have a size Lc of not less than 100 nm with respect to an axis c direction and a size La of less than 100 nm with respect to an axis a direction.

2. An anode material for a lithium secondary battery as set forth in Claim 1, wherein a ratio of the boron compounds presenting as boron in said graphitized carbon material is in the range of 3 - 20 Wt.%.

3. An anode material for a lithium secondary battery as set forth in Claim 1 or 2, wherein said boron compounds are boron oxide.

4. An anode material for a lithium secondary battery as set forth in any one of Claims 1 to 3, wherein said anode material for lithium secondary battery has at least 1% of discharge capacities [ mAh / g ] for 0 to 0.25 V [ VvsLi / Li+ ] with respect to discharge capacities [ mAh / g ] for not less than 1.3 V [ VvsLi / Li+ ].

5. A method for producing an anode material for a lithium secondary battery characterized in that a mixture prepared by adding a powder of boron compound to a carbon material in a ratio of 3- 20 wt.% in terms of boron is formed into ablock and then the block is heat-treated at temperatures of not less than 2,400 °C in a reducing atmosphere or an inert gas atmosphere, and the obtained graphitized carbon material block is controlled in particle size via a pulverizing means for inducing the block to be fractured in an a-axis direction rather than peeled off in a c-axis direction.

6. A method for producing an anode material for a lithium secondary battery as set forth in Claim 5, wherein said pulverizing means is adapted to cool said graphitized carbon material block in advance before pulverizing it.

7. A method for producing an anode material for a lithium secondary battery as set forth in Claim 6, wherein said pulverizing means is adapted to cool said graphitized carbon material block in advance by use of liquid nitrogen before pulverizing it.

8. A lithium secondary battery in which the anode material as set forth in any one of Claims 1 to 4 is used as an active material for the anode.
